# EUROPEAN PATENT APPLICATION

(11) **EP 4 446 733 A1**
(43) Date of publication of application: **16.10.2024**
(21) Application number: 22903907.8
(22) Date of filing: 27.10.2022
(51) Int. Cl.: G01N 30/14, B01J 20/02, B01J 20/20, G01N 21/35, G01N 30/00, G01N 30/88

(54) **METHOD FOR ANALYZING GAS CONTAINING NITROSYL FLUORIDE, AND METHOD FOR REMOVING NITROSYL FLUORIDE IN GAS**

(30) Priority: 06.12.2021 JP 2021197815
(71) Applicant: Resonac Corporation, Tokyo 105-7325 (JP)
(72) Inventor: IWASAKI Jumpei, Tokyo 105-8518 (JP); KANAUCHI Riku, Tokyo 105-8518 (JP)
(74) Representative: Strehl Schübel-Hopf & Partner
(86) International application number: PCT/JP2022/040249
(87) International publication number: WO 2023/105975

(57) **Abstract**

There is provided a method for analyzing gas containing nitrosyl fluoride capable of highly accurately and safely quantitatively determining oxygen gas and nitrogen gas contained in mixed gas containing nitrosyl fluoride and at least one of the oxygen gas and the nitrogen gas. The method for analyzing gas containing nitrosyl fluoride includes: a conversion step of bringing the mixed gas into contact with a reactant reacting with the nitrosyl fluoride to generate nitrogen oxide, and converting the nitrosyl fluoride into the nitrogen oxide by a reaction between the nitrosyl fluoride and the reactant; a removal step of bringing the gas after the conversion step into contact with an adsorbent adsorbing the nitrogen oxide, and removing the nitrogen oxide from the gas by the adsorption of the nitrogen oxide; and an analysis step of analyzing the gas after the removal step and quantitatively determining the oxygen gas and the nitrogen gas.

## Description

### Technical Field

The present invention relates to a method for analyzing gas containing nitrosyl fluoride, and a method for removing nitrosyl fluoride in gas.

### Background Art

Silicon nitride is a material used in semiconductor devices, such as a flash memory, but has a problem that the silicon nitride has low performance with which, when etched from other silicon materials, such as silicon oxide, the silicon nitride can be selectively etched (hereinafter sometimes also referred to as "etching selectivity") over the other silicon materials. An etching method for solving this problem includes dry etching. In particular, dry etching using nitrosyl fluoride (NOF) as an etching gas has high etching selectivity when the silicon nitride is etched from silicon oxide.

More specifically, when an etching object, which is an object to be etched by an etching gas, is the silicon nitride and a non-etching object, which is not an object to be etched by the etching gas, is silicon oxide, the etching by the dry etching using nitrosyl fluoride as an etching gas enables the selective etching of the silicon nitride serving as the etching object over the silicon oxide serving as the non-etching object.

However, when nitrosyl fluoride is used as the etching gas, the inclusion of oxygen gas or nitrogen gas in the nitrosyl fluoride tends to reduce the etching selectivity. Therefore, the amounts of the oxygen gas and the nitrogen gas contained in the nitrosyl fluoride are desirably as small as possible to suppress the decrease in the etching selectivity. To reduce the amounts of the oxygen gas and the nitrogen gas contained in the nitrosyl fluoride, an analysis method has been required which can highly accurately quantitatively determine the amounts of the oxygen gas and the nitrogen gas in the nitrosyl fluoride.

PTL 1 discloses an analysis method for indirectly quantitatively determining fluorine gas in fluorine gas-containing gas by bringing the fluorine gas-containing gas into contact with a reactant, such as soda lime, to convert the fluorine gas into oxygen gas, and quantitatively determining the generated oxygen gas. Further, PTL 2 discloses an analysis method for quantitatively determining impurity gases in fluorine gas containing oxygen gas, nitrogen gas, and the like as impurity gases by bringing the fluorine gas into contact with metal fluoride as a reactant, removing the fluorine gas by a reaction with the metal fluoride, and quantitatively determining the remaining impurity gases.

### Citation List

### Patent Literatures

PTL 1: JP 7-97106 A
PTL 2: JP 3339962 B

### Summary of Invention

### Technical Problem

However, the analysis methods disclosed in PTLS 1, 2 are applicable to fluorine gas, but have not been suitable for nitrosyl fluoride. More specifically, reactants used in the analysis methods disclosed in PTLS 1, 2, have had insufficient reactivity with nitrosyl fluoride.

When the reactivity between nitrosyl fluoride and the reactants is low, unreacted nitrosyl fluoride remains, which has posed a risk that the nitrosyl fluoride reacts with water to form hydrogen fluoride (HF) in a succeeding step. The hydrogen fluoride is a highly corrosive and toxic compound. Therefore, it has been preferable to avoid the generation of the hydrogen fluoride from the viewpoint of safety.

For example, when the unreacted nitrosyl fluoride flows into an analysis instrument used when oxygen gas or nitrogen gas is quantitatively analyzed, the nitrosyl fluoride reacts with water present inside the analysis instrument to generate hydrogen fluoride, which has posed a risk that the analysis instrument is corroded due to the hydrogen fluoride.

It is an object of the present invention to provide a method for analyzing gas capable of highly accurately and safely quantitatively determining oxygen gas and nitrogen gas contained in mixed gas containing nitrosyl fluoride and at least one of the oxygen gas and the nitrogen gas.

### Solution to Problem

To achieve the above-described object, one aspect of the present invention is as described in [1] to [8] below.
[1] A method for analyzing gas containing nitrosyl fluoride,
   the method being a method for quantitatively determining oxygen gas and nitrogen gas in mixed gas containing nitrosyl fluoride and at least one of the oxygen gas and the nitrogen gas, includes:
   a conversion step of bringing the mixed gas into contact with a reactant reacting with the nitrosyl fluoride to generate nitrogen oxide, and converting the nitrosyl fluoride into the nitrogen oxide by a reaction between the nitrosyl fluoride and the reactant;
   a removal step of bringing the gas after the conversion step into contact with an adsorbent adsorbing the nitrogen oxide, and removing the nitrogen oxide from the gas by the adsorption of the nitrogen oxide; and
   an analysis step of analyzing the gas after the removal step and quantitatively determining the oxygen gas and the nitrogen gas, in which
   the reactant has a specific surface area of 0.2 m²/g or more.
[2] The method for analyzing gas containing nitrosyl fluoride according to [1], in which the reactant contains at least one of alkali metal hydroxides, alkali metal oxides, alkali metal carbonates, alkali metal bicarbonates, alkaline earth metal hydroxides, alkaline earth metal oxides, alkaline earth metal carbonates, and alkaline earth metal bicarbonates.
[3] The method for analyzing gas containing nitrosyl fluoride according to [1] or [2], in which the adsorbent contains at least one of porous bodies, carbonaceous materials, iron particles, copper particles, and zinc particles.
[4] The method for analyzing gas containing nitrosyl fluoride according to any one of [1] to [3], in which a method for quantitatively determining the oxygen gas and the nitrogen gas in the analysis step is gas chromatography.
[5] A method for removing nitrosyl fluoride in gas,
   the method being a method for removing nitrosyl fluoride from gas containing the nitrosyl fluoride, includes:
   a conversion step of bringing the gas containing the nitrosyl fluoride into contact with a reactant reacting with the nitrosyl fluoride to generate nitrogen oxide, and converting the nitrosyl fluoride into the nitrogen oxide by a reaction between the nitrosyl fluoride and the reactant; and
   a removal step of bringing the gas after the conversion step into contact with an adsorbent adsorbing the nitrogen oxide, and removing the nitrogen oxide from the gas by the adsorption of the nitrogen oxide.
[6] The method for removing nitrosyl fluoride in gas according to [5], in which the reactant has a specific surface area of 0.2 m²/g or more.
[7] The method for removing nitrosyl fluoride in gas according to [5] or [6], in which the reactant contains at least one of alkali metal hydroxides, alkali metal oxides, alkali metal carbonates, alkali metal bicarbonates, alkaline earth metal hydroxides, alkaline earth metal oxides, alkaline earth metal carbonates, and alkaline earth metal bicarbonates.
[8] The method for removing nitrosyl fluoride in gas according to any one of [5] to [7], in which the adsorbent contains at least one of porous bodies, carbonaceous materials, iron particles, copper particles, and zinc particles.

### Advantageous Effects of Invention

According to the method for analyzing gas containing nitrosyl fluoride of the present invention, oxygen gas and nitrogen gas contained in mixed gas containing nitrosyl fluoride and at least one of the oxygen gas and the nitrogen gas can be highly accurately and safely quantitatively determined. According to the method for removing nitrosyl fluoride in gas of the present invention, nitrosyl fluoride can be removed from gas containing the nitrosyl fluoride.

### Brief Description of Drawings

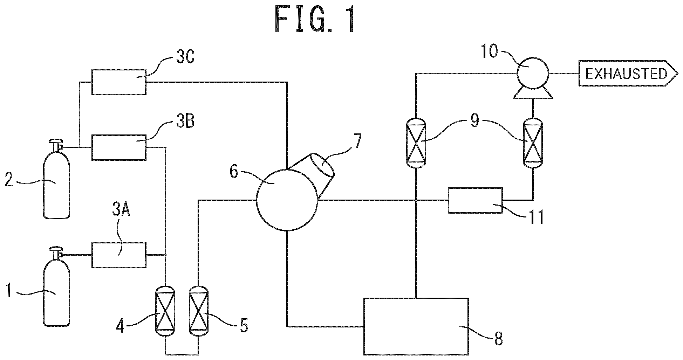

FIG. 1 is a schematic diagram of one example of an analysis device for explaining one embodiment of a method for analyzing gas containing nitrosyl fluoride and a method for removing nitrosyl fluoride in gas according to the present invention.

### Description of Embodiments

Hereinafter, one embodiment of the present invention is described. This embodiment illustrates one example of the present invention, and the present invention is not limited to this embodiment. This embodiment can be variously altered or improved, and such altered or improved aspects may also be included in the present invention.

A method for analyzing gas containing nitrosyl fluoride according to this embodiment is a method for quantitatively determining oxygen gas (O₂) and nitrogen gas (N₂) in mixed gas containing nitrosyl fluoride (NOF) and at least one of the oxygen gas and the nitrogen gas (hereinafter sometimes also simply referred to as a "mixed gas"). In the method for analyzing gas containing nitrosyl fluoride according to this embodiment, a method for removing nitrosyl fluoride from the mixed gas is used as pretreatment. A method for removing nitrosyl fluoride in gas according to this embodiment includes; a conversion step of bringing the mixed gas into contact with a reactant reacting with the nitrosyl fluoride to generate nitrogen oxide, and converting the nitrosyl fluoride into the nitrogen oxide by a reaction between the nitrosyl fluoride and the reactant; and a removal step of bringing the gas after the conversion step into contact with an adsorbent adsorbing the nitrogen oxide, and removing the nitrogen oxide from the gas after the conversion step by the adsorption of the nitrogen oxide.

The method for analyzing gas containing nitrosyl fluoride according to this embodiment is a method for quantitatively determining the oxygen gas and the nitrogen gas in the mixed gas using the above-described method for removing nitrosyl fluoride in gas according to this embodiment. More specifically, the method for analyzing gas containing nitrosyl fluoride according to this embodiment includes the above-described conversion step, the above-described removal step, and an analysis step of analyzing the gas after the removal step and quantitatively determining the oxygen gas and the nitrogen gas.

According to the method for removing nitrosyl fluoride in gas of this embodiment, the nitrosyl fluoride can be efficiently removed from the mixed gas. Thus, gas can be obtained, in which the content of the nitrosyl fluoride is zero or very small, and therefore the oxygen gas and the nitrogen gas contained in the mixed gas can be highly accurately quantitatively determined. Further, the nitrosyl fluoride can be removed from gas containing the nitrosyl fluoride, such as exhaust gas of an etching device.

The nitrosyl fluoride hardly remains in the gas subjected to the removal of the nitrosyl fluoride by the method for removing nitrosyl fluoride in gas according to this embodiment. Therefore, even when the gas after the removal step comes into contact with water, hydrogen fluoride is hardly generated. Thus, a problem, such as the corrosion by hydrogen fluoride of an analysis instrument used when the oxygen gas or the nitrogen gas is quantitatively analyzed, is less likely to occur, making it possible to safely quantitatively determine the oxygen gas or the nitrogen gas contained in the mixed gas.

According to the method for analyzing gas containing nitrosyl fluoride of this embodiment, the oxygen gas and the nitrogen gas contained in the mixed gas can be highly accurately quantitatively determined. Therefore, oxygen gas and nitrogen gas entrained in produced nitrosyl fluoride can be highly accurately quantitatively determined. Thus, high-purity nitrosyl fluoride gas used in an etching gas for semiconductors and the like can be stably supplied.

Hereinafter, the method for analyzing gas containing nitrosyl fluoride according to this embodiment and the method for removing nitrosyl fluoride in gas according to this embodiment used for the method for analyzing gas containing nitrosyl fluoride are described in more detail.

### [Mixed gas]

The mixed gas is gas containing the nitrosyl fluoride and at least one of oxygen gas and nitrogen gas. The mixed gas may contain both oxygen gas and nitrogen gas or may only one of oxygen gas and nitrogen gas. The mixed gas may further contain dilution gas described below. The mixed gas diluted by the dilution gas is sometimes referred to as a "diluted mixed-gas".

The mixed gas may further contain other components besides the nitrosyl fluoride, oxygen gas, and nitrogen gas. The other components include nitrogen monoxide (NO), nitrogen dioxide (NO₂), dinitrogen monoxide (N₂O), dinitrogen tetroxide (N₂O₄), dinitrogen pentoxide (N₂O₅), nitryl fluoride (NO₂F), trifluoroamine-N-oxide (F₃NO), and the like, for example. Most of the other components are impurities generated in the production of the nitrosyl fluoride and entrained in the nitrosyl fluoride.

The components other than the nitrosyl fluoride, oxygen gas, and nitrogen gas contained in the mixed gas may be one type or may be two or more types. The contents of the components other than the nitrosyl fluoride, oxygen gas, and nitrogen gas contained in the mixed gas are not particularly limited, and may be large or may be very small. When the components other than the nitrosyl fluoride, oxygen gas, and nitrogen gas contained in the mixed gas are two or more types, the contents of all the components may be large, the contents of all the components may be as small as several ppm by volume, or the contents of some of the components may be large and the contents of the other components may be as small as several ppm by volume.

### [Reactant]

The type of the reactant is not particularly limited insofar as it reacts with the nitrosyl fluoride to generate nitrogen oxide and has high reactivity with the nitrosyl fluoride. However, metal fluorides are excluded. Specific examples of the reactant include alkali metal hydroxides, alkali metal oxides, alkali metal carbonates, alkali metal bicarbonates, alkaline earth metal hydroxides, alkaline earth metal oxides, alkaline earth metal carbonates, and alkaline earth metal bicarbonates. These reactants may be used alone or may be used in combination of two or more thereof.

Specific examples of the reactant include lithium hydroxide (LiOH), sodium hydroxide (NaOH), potassium hydroxide (KOH), magnesium hydroxide (Mg(OH)₂), calcium hydroxide (Ca(OH)₂), strontium hydroxide (Sr(OH)₂), barium hydroxide (Ba(OH)₂), lithium oxide (Li₂O), sodium oxide (Na₂O), potassium oxide (K₂O), magnesium oxide (MgO), calcium oxide (CaO), strontium oxide (SrO), barium oxide (BaO), lithium carbonate (Li₂CO₃), sodium carbonate (Na₂CO₃), potassium carbonate (K₂CO₃), magnesium carbonate (MgCO₃), calcium carbonate (CaCO₃), strontium carbonate (SrCO₃), barium carbonate (BaCO₃), lithium hydrogen carbonate (LiHCO₃), sodium hydrogen carbonate (NaHCO₃), potassium hydrogen carbonate (KHCO₃), magnesium hydrogen carbonate (Mg(HCO₃)₂), calcium hydrogen carbonate (Ca(HCO₃)₂), strontium hydrogen carbonate (Sr(HCO₃)₂), barium hydrogen carbonate (Ba(HCO₃)₂), and soda lime.

The shape of the reactant is not particularly limited, and is preferably a powder shape, a particle shape, a pellet shape, or a lump shape. The specific surface area of the reactant is preferably 0.2 m²/g or more, more preferably 0.5 m²/g or more, and still more preferably 1.0 m²/g or more. When the specific surface area of the reactant is 0.2 m²/g or more, the reactivity with the nitrosyl fluoride becomes higher. It is preferable that the specific surface areas of all of the reactants used in the reaction with the nitrosyl fluoride are 0.2 m²/g or more, but it may be acceptable that the specific surface areas of some of the reactants are 0.2 m²/g or more. A method for analyzing the specific surface area of the reactant is not particularly limited. The specific surface area of the reactant can be analyzed by a BET specific surface area measurement method using a specific surface area & pore size analyzer or the like, for example.

A method for obtaining the reactant having the specific surface area of 0.2 m²/g or more is not particularly limited. The reactant can be obtained by grinding the reactant in the form of a large lump by some mechanical means. The mechanical means include a method for mechanically grinding the reactant using an instrument, such as a ball mill, a bead mill, a colloid mill, a conical mill, a disc mill, a milling mill, a hammer mill, a mortar, a pellet mill, a Wiley mill, a roller mill, a jet mill, a high-pressure grinding roll, a Henschel mixer, or a Nauta mixer, for example. One type of these instruments may be used alone for the grinding, or two or more types thereof may be used in combination for the grinding.

### [Conversion step]

The conversion step is a step of bringing the mixed gas into contact with the reactant reacting with the nitrosyl fluoride to generate nitrogen oxide, and converting the nitrosyl fluoride into the nitrogen oxide by the reaction between the nitrosyl fluoride and the reactant. The type of the nitrogen oxide to be generated varies depending on the type of the reactant. The nitrogen oxide includes nitrogen monoxide, nitrogen dioxide, dinitrogen tetroxide, dinitrogen pentoxide, and the like, for example.

In the reaction between the nitrosyl fluoride and the reactant, the nitrosyl fluoride decomposes to generate nitrogen monoxide and fluorine molecules, and the generated nitrogen monoxide and fluorine molecules react with the reactant. When the reactant is any of the alkali metal compounds and the alkaline earth metal compounds described above, the reaction with the nitrogen monoxide and the fluorine molecules generates, in addition to the nitrogen oxide, metal fluoride, metal nitrate, metal nitrite, water, and the like.

A reaction formula when the reactant is sodium hydroxide is shown in Formula 1. A reaction formula when the reactant is calcium hydroxide is shown in Formula 2.

4NOF + 6NaOH -> NaNOs + NaNO₂ + 4NaF + 2NO +3H₂O ··· (Formula 1)

8NOF + 6Ca(OH)₂ → Ca(NO₃)₂ + Ca(NO₂)₂ + 4CaF₂ + 4NO +6H₂O ··· (Formula 2)

The use amount of the reactant may be an excess amount equal to or more than the reaction equivalent relative to the nitrosyl fluoride. When the conversion step is continuously performed, the use amount may be an excess amount relative to the total circulation amount of the mixed gas, and is preferably twice or more and 20 times or less the reaction equivalent and still more preferably 3 times or more and 10 times or less the reaction equivalent, for example.

The reaction of the conversion step can be performed by introducing the mixed gas, preferably gas diluted with a rare gas (referred to as a "diluted mixed-gas"), into a reaction tube filled with the reactant, and making the diluted mixed-gas pass therethrough, for example. Metal fluoride, metal nitrate, and metal nitrite generated in this reaction are deposited to remain in the reaction tube, and gas components, such as oxygen gas, nitrogen gas, and nitrogen oxide, are discharged from the reaction tube.

### [Adsorbent]

The type of the adsorbent is not particularly limited insofar as it can absorb nitrogen oxide, and includes porous bodies, carbonaceous materials, iron particles, copper particles, and zinc particles, for example. These adsorbents may be used alone or in combination of two or more types thereof. The diameters of the iron particles, the copper particles, and the zinc particles are preferably 500 um or less and more preferably 300 um or less.

Specific examples of the porous bodies include silica gel, zeolite, alumina (Al₂O₃), a molecular sieve, diatomaceous earth, activated carbon, charcoal, and the like. These porous bodies may be natural products or synthetic products.

Specific examples of the carbonaceous materials include activated carbon, charcoal, bone char, graphite, carbon black, coke, coal, fullerene, carbon nanotubes, carbon microcoils, glassy carbon, and the like.

The nitrogen oxide is required to be absorbed by the adsorbent, and the oxygen gas and the nitrogen gas are required not to be absorbed by the adsorbent. Therefore, from this viewpoint, silica gel and a molecular sieve are more preferable.

### [Removal step]

The removal step is a step of bringing the gas after the conversion step into contact with the adsorbent adsorbing nitrogen oxide, and removing the nitrogen oxide from the gas after the conversion step by the adsorption of the nitrogen oxide. The gas after the conversion step hardly contains the nitrosyl fluoride, and contains at least one of the oxygen gas and the nitrogen gas, and nitrogen oxide gas. Among these components, the oxygen gas and the nitrogen gas are not adsorbed by the adsorbent, and the nitrogen oxide is adsorbed by the adsorbent.

### [Analysis step]

The analysis step is a step of analyzing the gas after the removal step and quantitatively determining the oxygen gas and the nitrogen gas. The gas after the removal step hardly contains the nitrosyl fluoride and the nitrogen oxide and contains at least one of the oxygen gas and the nitrogen gas. Therefore, the oxygen gas and the nitrogen gas in the gas after the removal step are quantitatively determined. Thus, the oxygen gas and the nitrogen gas originally contained in the mixed gas before being subjected to the conversion step can be quantitatively determined.

A quantitative determination method includes, but not particularly limited to, methods using gas chromatography, a gas detector (a galvanic cell type, a zirconia type, a magnetic type, a wavelength tunable semiconductor laser spectroscopy type), and the like, for example. A column packing material of a gas chromatograph when the oxygen gas and the nitrogen gas are quantitatively analyzed is preferably a molecular sieve 13X. The detector of the gas chromatograph is not particularly limited, and is preferably a flame ionization detector (FID).

Next, one example of the configuration of an analysis device capable of carrying out the method for analyzing gas containing nitrosyl fluoride according to this embodiment is described with reference to FIG. 1. First, the analysis device in FIG. 1 is described.

The analysis device in FIG. 1 includes: a mixed gas cylinder 1 filled with mixed gas containing nitrosyl fluoride, oxygen gas, and nitrogen gas; a dilution gas cylinder 2 filled with dilution gas for diluting the mixed gas; a mixed gas sending section 3A sending the mixed gas; dilution gas sending sections 3B, 3C sending dilution gas; a reactant-filled tank 4 filled with a reactant; an adsorbent-filled tank 5 filled with an adsorbent; a flow path switching valve 6, and a measuring tube 7 measuring gas. The dilution gas is also used as cleaning gas for cleaning the inside of the system of the analysis device.

The analysis device in FIG. 1 further includes a gas chromatograph 8 performing gas analysis by gas chromatography; an infrared spectrophotometer 11 analyzing gas by infrared spectrometry; detoxifying tanks 9, 9 removing hazardous substances from gas after the completion of the analysis before exhausting the gas after the completion of the analysis to the outside; and a vacuum pump 10 reducing the pressure inside the system of the analysis device. These are connected to each other by a pipe as illustrated in FIG. 1.

As the dilution gas, rare gases, such as helium (He) and argon (Ar), are usable. The rare gas is preferably the same type as the carrier gas of gas chromatography described later. For the mixed gas sending section 3A and the dilution gas sending sections 3B, 3C, a mass flow controller is usable, for example. The measuring tube 7 is attached to the flow path switching valve 6, and is configured so that the gas is introduced into the measuring tube 7 by setting the flow path switching valve 6 to the charge side, and the measuring tube 7 measures a predetermined amount of the gas. Then, the flow path switching valve 6 is switched from the charge side to the discharge side, so that the predetermined amount of the gas in the measuring tube 7 is carried away by a carrier gas, such as helium, to be introduced into the gas chromatograph 8.

When the mixed gas is analyzed using the analysis device in FIG. 1, the pressure inside the system of the analysis device is reduced using the vacuum pump 10, the mixed gas in the mixed gas cylinder 1 is sent to the reactant-filled tank 4 by the mixed gas sending section 3A, and the nitrosyl fluoride in the mixed gas is made to react with a reactant, so that the nitrosyl fluoride is converted into nitrogen oxide. This conversion step removes the nitrosyl fluoride from the mixed gas, and therefore the gas after the conversion step becomes gas containing nitrogen oxide, oxygen gas, and nitrogen gas.

The gas passing through the reactant-filled tank 4 is sent to the adsorbent filling tank 5, and the nitrogen oxide in the gas is adsorbed by the adsorbent. This removal step removes the nitrogen oxide from the gas after the conversion step, and therefore the gas after the removal step becomes gas containing oxygen gas and nitrogen gas.

The gas passing through the adsorbent-filled tank 5 is sent to the measuring tube 7 via the flow path switching valve 6, and a predetermined amount is measured. Then, the measured predetermined amount of the gas is sent to the gas chromatograph 8, and the oxygen gas and the nitrogen gas are quantitively analyzed. In this specification, the gas introduced into the analysis device after the conversion step and the removal step as described above is sometimes referred to as a "sample gas".

The sample gas introduced into the gas chromatograph 8 is separated by a column packed with a packing material for gas chromatograph, and detected by a detector, such as a thermal conductivity detector or a flame ionization detector. Reference gases (reference oxygen gas and reference nitrogen gas) are analyzed in advance by the same operation. By comparing the peak areas of the reference gases obtained by the analysis of the reference gases with the peaks of the oxygen gas and the nitrogen gas obtained by the analysis of the sample gas, the oxygen gas and the nitrogen gas can be quantitatively determined.

There is a possibility that the nitrosyl fluoride or the nitrogen oxide remains in the gas passing through the adsorbent-filled tank 5, but the nitrosyl fluoride and the nitrogen oxide are difficult to detect by the gas chromatograph 8. When the nitrosyl fluoride and the nitrogen oxide are required to be quantitatively analyzed, the nitrosyl fluoride and the nitrogen oxide can be quantitatively determined by sending the sample gas passing through the adsorbent-filled tank 5 to the infrared spectrophotometer 11.

The sample gas after the completion of the quantitative analysis is exhausted from the analysis device to the outside. However, when the exhaust gas contains hazardous substances, for example, the exhaust gas can be exhausted to the outside after being sent to the detoxifying tank 9 for the removal of the hazardous substances as necessary. The detoxifying tank 9 is filled with the adsorbent, such as activated carbon or zeolite, and therefore the hazardous substances are removed from the exhaust gas after the completion of the quantitative analysis.

The gas containing the nitrosyl fluoride circulates through a pipe used as a gas flow path in the analysis device in FIG. 1, and therefore the pipe preferably contains a material having corrosion resistance against the nitrosyl fluoride. The material of the pipe includes stainless steel, nickel, Inconel (registered trademark), Monel (registered trademark), and the like, for example. The inner diameter of the pipe can be set as appropriate according to the flow rate of the gas, and is preferably 1 mm or more and 50 mm or less and more preferably 3 mm or more and 25 mm or less.

### EXAMPLES

Hereinafter, the present invention is described in more detail with reference to Examples and Comparative Examples.

### (Comparative Example 1)

Mixed gas, which is nitrosyl fluoride gas containing oxygen gas and nitrogen gas and having about 99.9% by volume purity was analyzed using an analysis device having substantially the same configuration as that of the analysis device in FIG. 1. An analysis method is described with reference to FIG. 1.

The mixed gas was sent from the mixed gas cylinder 1 filled with about 11 kg of the mixed gas to the pipe while the flow rate was adjusted to 50 mL/min using the mixed gas sending section 3A (digital mass flow controller SEC-N100 manufactured by HORIBA STEC, Co., Ltd.). Helium having about 100% purity was sent from the dilution gas cylinder 2 to the pipe while the flow rate was adjusted to 50 mL/min using the dilution gas sending section 3B (digital mass flow controller SEC-N100 manufactured by HORIBA STEC, Co., Ltd.). Thus, equal amounts of the mixed gas containing nitrosyl fluoride and the helium were mixed in the pipe to form diluted mixed-gas.

The pressure inside the system of the analysis device was reduced using the vacuum pump 10. Then, the diluted mixed-gas was sent to the reactant-filled tank 4 via the pipe, and then sent to the adsorbent-filled tank 5. Thus, the nitrosyl fluoride in the diluted mixed-gas was made to react with the reactant in the reactant-filled tank 4 to be converted into nitrogen oxide, and the generated nitrogen oxide was adsorbed to the adsorbent in the adsorbent-filled tank 5. The flow path switching valve 6 was set to the charge side, and the gas passing through the adsorbent-filled tank 5 was sent to the detoxifying tank 9 through the measuring tube 7.

The reactant is potassium hydroxide having a specific surface area of 0.10 m²/g, and about 25 g (equivalent to about 3.4 × 10⁻¹ mol) of the potassium hydroxide was filled into the reactant-filled tank 4 having a capacity of 50 mL. The specific surface area of the potassium hydroxide was measured using a specific surface area & pore size analyzer BELSORP MAX manufactured by MicrotracBEL Corp. The adsorbent is silica gel, and about 20 g (equivalent to about 3.4 × 10⁻¹ mol) of the silica gel was filled into the adsorbent-filled tank 5 having a capacity of 50 mL. Nitrogen oxide generated by the reaction between the nitrosyl fluoride and the reactant is nitrogen monoxide, nitrogen dioxide, dinitrogen tetroxide, or dinitrogen pentoxide.

Ten minutes after the gas passing through the adsorbent-filled tank 5 was continuously sent to the detoxifying tank 9, the flow path switching valve 6 was switched from the charge side to the discharge side, and 5 mL of the sample gas, which had been measured by the measuring tube 7, was introduced into the gas chromatograph 8. Then, the sample gas was used as a sample at the time when 10 minutes had passed after the start of the passage of the sample gas through the reactant-filled tank 4 and the adsorbent-filled tank 5. Thus, the oxygen gas and the nitrogen gas in the sample gas passing through the adsorbent-filled tank 5 were quantitatively analyzed. In the quantitative analysis of the oxygen gas and the nitrogen gas, helium (reference gas) with which the oxygen gas and the nitrogen gas each were mixed in a proportion of 10 ppm by volume was analyzed in advance by the gas chromatograph, and the concentrations were calculated using the area values at that time.

In this quantitative determination method, the sample gas after the diluted mixed-gas had been subjected to the conversion step and the removal step was set as an analyzing target. In Examples and Comparative Examples of this application, the amounts of the nitrosyl fluoride and the dilution gas in the mixed gas are almost equal. Therefore, the sample gas when it was assumed that the nitrosyl fluoride and a converted product thereof were completely removed had a composition in which the nitrosyl fluoride in the mixed gas was almost replaced by the helium. Therefore, the oxygen gas concentration and the nitrogen gas concentration in the sample gas can be assumed as the respective concentrations in the mixed gas.

When the flow rate of the dilution gas is different from the flow rate of the nitrosyl fluoride in the mixed gas, the oxygen gas concentration and the nitrogen gas concentration may be converted according to the flow rate. For example, when the flow rate of the dilution gas was twice the flow rate of the nitrosyl fluoride in the mixed gas, the oxygen gas concentration or the nitrogen gas concentration in the mixed gas can be assumed to be twice the concentration in the sample gas.

The results are shown in Table 1. The measurement conditions of the gas chromatograph are as follows.
Gas chromatograph: GC-2014 manufactured by Shimadzu Corporation
Column packing material: Shincarbon-ST manufactured by Shinwa Chemical Industries Ltd.
Injection temperature: 150°C
Column temperature: 50°C
Detector: Flame ionization detector
Detector temperature: 200°C
Current: 180 mA
Carrier gas: Helium
Carrier gas flow rate: 100 mL/min

Immediately after the introduction of the sample gas into the gas chromatograph 8, the flow path switching valve 6 was switched to send the gas passing through the adsorbent-filled tank 5 to the infrared spectrophotometer 11 (infrared spectrophotometer Nicolet 1S10 manufactured by Thermo Fisher Scientific Co., Ltd.). Then, the sample gas at the time when 10 minutes had passed after the start of the passage of the gas through the reactant-filled tank 4 and the adsorbent-filled tank 5 was analyzed by the infrared spectroscopy while the gas passing through the adsorbent-filled tank 5 was made to flaw to the downstream side, i.e., to the detoxifying tank 9 side. Thus, it was confirmed whether the sample gas passing through the adsorbent-filled tank 5 contained the nitrosyl fluoride and the nitrogen oxide and the detection time of the nitrosyl fluoride was measured.

More specifically, the breakthrough time of the reactant was evaluated by continuously sending the gas passing through the adsorbent-filled tank 5 to the infrared spectrophotometer 11 for analysis whenever necessary, and confirming whether the nitrosyl fluoride was mixed with the sample gas using the obtained infrared absorption spectrum. The measurement wavelengths (wave numbers) and compounds corresponding thereto used in the analysis by the infrared spectrophotometer are as follows.
NOF: 1850 cm⁻¹
NO: 1940 cm⁻¹
NO₂: 1630 cm⁻¹
N₂O₄: 1260 cm⁻¹
N₂O₅: 1722 cm⁻¹

A case where the nitrosyl fluoride was detected when the time while the diluted mixed-gas was circulated through the reactant-filled tank 4 and the adsorbent-filled tank 5 was 300 min or less was evaluated as "D", a case where the nitrosyl fluoride was detected when the time was more than 300 min and 330 min or less was evaluated as "C", a case where the nitrosyl fluoride was detected when the time was more than 330 min and 360 min or less was evaluated as "B", and a case where the nitrosyl fluoride was detected when the time exceeded 360 min or a case where the nitrosyl fluoride was not detected even when the time exceeded 360 min was evaluated as "A". The results are shown in Table 1.

Further, the corrosion of the analysis device was also evaluated. A plate-like test piece (10 mm long, 5 mm wide, 1 mm thick) formed of stainless steel SUS316L was installed inside the pipe near an outlet of the adsorbent-filled tank 5. The discoloration due to corrosion of the plate-like test piece was visually confirmed. A case where the discoloration of the plate-like test piece was confirmed when the time while the diluted mixed-gas was circulated through the reactant-filled tank 4 and the adsorbent-filled tank 5 was 300 min or less was evaluated as "D", a case where the discoloration was confirmed when the time was more than 300 min and 330 min or less was evaluated as "C", a case where the discoloration was confirmed when the time was more than 330 min and 360 min or less was evaluated as "B", and a case where the discoloration was confirmed when the time exceeded 360 min or a case where the discoloration was not confirmed even when the time exceeded 360 min was evaluated as "A". The results are shown in Table 1.

In Table 1, silica gel is manufactured by KANTO KAGAKU., (white (medium grain), product number 37045-02), and a molecular sieve is manufactured by KANTO KAGAKU., (5A 1/16, product number 25959-08).

**[Table 1]**

| | Reactant | Specific surface area m²/g | Adsorbent | Oxygen gas concentration ppm by volume | Nitrogen gas concentration ppm by volume | Time until NOF was detected | Infrared spectroscopy | | Time until discoloration was confirmed |
|---|---|---|---|---|---|---|---|---|---|
| | | | | | | | NOF | Nitrogen oxide | |
| Ex. 1 | Potassium hydroxide | 0.21 | Silica gel | 31 | 351 | C | None | None | C |
| Ex. 2 | Potassium hydroxide | 0.55 | Silica gel | 33 | 357 | B | None | None | B |
| Ex. 3 | Potassium hydroxide | 102 | Silica gel | 30 | 348 | A | None | None | A |
| Ex. 4 | Sodium hydroxide | 0.22 | Molecular sieve | 35 | 350 | C | None | None | C |
| Ex. 5 | Sodium hydroxide | 0.64 | Molecular sieve | 33 | 350 | B | None | None | B |
| Ex. 6 | Sodium hydroxide | 1.15 | Molecular sieve | 32 | 343 | A | None | None | A |
| Ex. 7 | Potassium hydroxide | 0.55 | Silica gel | 1029 | 1342 | B | None | None | B |
| Ex. 8 | Potassium hydroxide | 102 | Silica gel | 1034 | 1353 | A | None | None | A |
| Comp. Ex. 1 | Potassium hydroxide | 0.10 | Silica gel | 15 | 170 | D | Presence | None | D |
| Comp. Ex. 2 | Potassium hydroxide | 0.18 | Silica gel | 27 | 328 | D | Presence | None | D |
| Comp. Ex. 3 | Sodium hydroxide | 0.08 | Molecular sieve | 12 | 143 | D | Presence | None | D |
| Comp. Ex. 4 | Sodium hydroxide | 0.19 | Molecular sieve | 30 | 333 | D | Presence | None | D |
| Comp. Ex. 5 | Potassium hydroxide | 0.10 | Silica gel | 1016 | 1173 | D | Presence | None | D |
| Comp. Ex. 6 | Sodium fluoride | 330 | Molecular sieve | 16 | 174 | D | Presence | None | D |
| Comp. Ex. 7 | Sodium fluoride | 7.35 | Molecular sieve | 17 | 173 | D | Presence | None | D |
| Comp. Ex. 8 | Potassium hydroxide | 0.55 | None | 28 | 322 | B | None | Presence | D |
| Comp. Ex. 9 | Potassium hydroxide | 102 | None | 29 | 329 | A | None | Presence | C |
| Comp. Ex. 10 | None | - | None | - | - | D | Presence | Presence | D |

### [Comparative Example 2 and Examples 1 to 3]

Various analyses, evaluations, and the like (i.e., quantitative analysis of the oxygen gas and the nitrogen gas, detection of the nitrosyl fluoride and the nitrogen oxide in the sample gas after passing through the reactant-filled tank 4 and the adsorbent-filled tank 5 for 10 minutes, measurement of the breakthrough time of the reactant, and evaluation of the discoloration due to corrosion of the plate-like test piece) were performed in the same manner as in Comparative Example 1, except for using potassium hydroxides having the specific surface areas shown in Table 1 as the reactant. The results are shown in Table 1. The potassium hydroxides used in Comparative Example 2 and Examples 1 to 3 were obtained by grinding potassium hydroxide having a specific surface area of 0.10 m²/g using a mortar.

### (Comparative Examples 3, 4 and Examples 4 to 6)

Various analyses, evaluations, and the like were performed in the same manner as in Comparative Example 1, except for using sodium hydroxides having the specific surface areas shown in Table 1 as the reactant and using a molecular sieve in place of silica gel as the adsorbent. The results are shown in Table 1. The sodium hydroxides used in Comparative Example 4 and Examples 4 to 6 were obtained by grinding sodium hydroxide having a specific surface area of 0.08 m²/g using a mortar.

### (Comparative Example 5 and Examples 7, 8)

Various analyses, evaluations, and the like were performed in the same manner as in Comparative Example 1, except for using potassium hydroxides having the specific surface areas shown in Table 1 as the reactant and preparing the gas in the mixed gas cylinder 1 as described below. The results are shown in Table 1. The potassium hydroxides used in Examples 7, 8 were obtained by grinding potassium hydroxide having a specific surface area of 0.10 m²/g using a mortar.

A method for preparing the gas in the mixed gas cylinder 1 is described below. To the mixed gas cylinder 1 (mixed gas cylinder 1 used in Comparative Example 1) filled with the mixed gas, which is nitrosyl fluoride gas containing oxygen gas and nitrogen gas and having about 99.9% by volume purity, an oxygen gas cylinder filled with oxygen gas having 100% purity was coupled. A flow rate controller based on oxygen gas having a flow rate set to 25 sccm was connected to a coupled portion between both the cylinders. Then, the oxygen gas was supplied for about 2 seconds from the oxygen gas cylinder to the mixed gas cylinder 1, increasing the oxygen gas concentration of the mixed gas in the mixed gas cylinder 1 by about 1000 ppm by volume.

Next, the oxygen gas cylinder was removed from the mixed gas cylinder 1, and a nitrogen gas cylinder filled with nitrogen gas having 100% purity was coupled to the mixed gas cylinder 1. A flow rate controller based on nitrogen gas having a flow rate set to 25 sccm was connected to the coupled portion between both the cylinders. Then, the nitrogen gas was supplied for about 2 seconds from the nitrogen gas cylinder to the mixed gas cylinder 1, increasing the nitrogen gas concentration of the mixed gas in the mixed gas cylinder 1 by about 1000 ppm by volume. The mixed gas in which the oxygen gas concentration and the nitrogen gas concentration were increased as described above was subjected to the analyses.

### [Comparative Examples 6, 7]

Various analyses, evaluations, and the like were performed in the same manner as in Comparative Example 1, except for using sodium fluorides having the specific surface areas shown in Table 1 as the reactant. The results are shown in Table 1. The sodium fluoride used in Comparative Example 7 was obtained by grinding sodium fluoride having a specific surface area of 3.30 m²/g using a mortar.

### [Comparative Example 8]

Various analyses, evaluations, and the like were performed in the same manner as in Example 2, except for not using the adsorbent. The results are shown in Table 1.

### [Comparative Example 9]

Various analyses, evaluations, and the like were performed in the same manner as in Example 3, except for not using the adsorbent. The results are shown in Table 1.

### [Comparative Example 10]

Various analyses, evaluations, and the like were performed in the same manner as in Comparative Example 1, except for not using the reactant and the adsorbent. The results are shown in Table 1.

The results shown in Table 1 are discussed. In all Examples, the NOF and the nitrogen oxide were not detected in the sample gas at the time when 10 minutes had passed after the start of the passage of the gas through the reactant-filled tank 4 and the adsorbent-filled tank 5, and therefore it can be assumed that the nitrosyl fluoride and a converted product thereof were completely removed. The sample gas has a composition in which the nitrosyl fluoride in the mixed gas was almost replaced by the helium, and the oxygen gas concentration and the nitrogen gas concentration in the sample gas can be assumed as the respective concentrations in the mixed gas.

In Examples 1, 4, the detection of the nitrosyl fluoride and the discoloration of the plate-like test piece were confirmed when the circulation time of the diluted mixed-gas was more than 300 min and 330 min or less. In Examples 2, 5, the detection of the nitrosyl fluoride and the discoloration of the plate-like test piece were confirmed when the circulation time of the diluted mixed-gas was more than 330 min and 360 min or less. In Examples 3,6, the detection of the nitrosyl fluoride and the discoloration of the plate-like test piece were not confirmed when the circulation time of the diluted mixed-gas exceeded 360 min.

From the results of Examples 1 to 6, it is estimated that the mixed gas, which is nitrosyl fluoride gas having about 99.9% by volume purity, contained about 32 ppm by volume of oxygen gas and about 350 ppm by volume of nitrogen gas. No influence of the type of the reactant and the type of the adsorbent was confirmed.

Examples 7, 8 are examples in which the oxygen gas concentration and the nitrogen gas concentration of the mixed gas in the mixed gas cylinder 1 each were increased by about 1000 ppm by volume. The analysis results also confirmed the oxygen gas concentration and the nitrogen gas concentration each were increased by about 1000 ppm by volume.

In Comparative Examples 1 to 5, the specific surface areas of the reactants are less than 0.2 m²/g, and therefore the detection of the nitrosyl fluoride and the discoloration of the plate-like test piece were confirmed when the circulation time of the diluted mixed-gas was 300 min or less. With a decrease in the specific surface area, a decrease in the oxygen gas concentration and the nitrogen gas concentration was confirmed. This is considered to be because, due to the decrease in the specific surface area of the reactant, the reactivity between the reactant and the nitrosyl fluoride decreased and the amount of the nitrosyl fluoride that was not able to be completely removed by the reactant increased, and therefore the oxygen gas concentration and the nitrogen gas concentration relatively decreased.

In Comparative Examples 6, 7, the detection of the nitrosyl fluoride and the discoloration of the plate-like test piece were confirmed when the circulation time of the diluted mixed-gas was 300 min or less. The oxygen gas concentration and the nitrogen gas concentration were about 1/2 times the oxygen gas concentrations and the nitrogen gas concentrations in Examples 1 to 6. From these facts, it is considered that the sodium fluoride used as the reactant had low reactivity with the nitrosyl fluoride, and the nitrosyl fluoride was not able to be completely removed.

Comparative Examples 8, 9 are examples in which the adsorbent was not used, and the detection time of the nitrosyl fluoride was equal to that of Examples 2, 3, but the discoloration of the plate-like test piece was confirmed in a shorter time than the detection time in Examples 2, 3. This is considered to be because the nitrosyl fluoride reacted with water generated by the reaction between the reactant and the nitrosyl fluoride, so that hydrogen fluoride was generated, causing the corrosion in a short time.

Further, the oxygen gas concentration and the nitrogen gas concentration were slightly lower than the oxygen gas concentrations and the nitrogen gas concentrations in Examples 1 to 6. This is considered to be because the nitrogen oxide and water generated by the reaction between the reactant and the nitrosyl fluoride were not adsorbed by the adsorbent, and therefore the oxygen gas concentration and the nitrogen gas concentration relatively decreased.

Comparative Example 10 is an example in which the reactant and the adsorbent were not used, and the detection of the nitrosyl fluoride and the discoloration of the plate-like test piece were confirmed when the circulation time of the diluted mixed-gas was 300 min or less. Further, due to the corrosion of the pipe or the like, air was mixed into the analysis device, and therefore the measurement limit of the quantitative analysis by the gas chromatograph 8 was exceeded, and the oxygen gas concentration and the nitrogen gas concentration were not able to be measured.

### Reference Signs List

- 1: mixed gas cylinder
- 2: dilution gas cylinder
- 3A: mixed gas sending section
- 3B, 3C: dilution gas sending section
- 4: reactant-filled tank
- 5: adsorbent-filled tank
- 6: flow path switching valve
- 7: measuring tube
- 8: gas chromatograph
- 9: detoxifying tank
- 10: vacuum pump
- 11: infrared spectrophotometer

## Claims

1. A method for analyzing gas containing nitrosyl fluoride,
the method being a method for quantitatively determining oxygen gas and nitrogen gas in mixed gas containing nitrosyl fluoride and at least one of the oxygen gas and the nitrogen gas,
the method comprising:
a conversion step of bringing the mixed gas into contact with a reactant reacting with the nitrosyl fluoride to generate nitrogen oxide, and converting the nitrosyl fluoride into the nitrogen oxide by a reaction between the nitrosyl fluoride and the reactant;
a removal step of bringing the gas after the conversion step into contact with an adsorbent adsorbing the nitrogen oxide, and removing the nitrogen oxide from the gas by the adsorption of the nitrogen oxide; and
an analysis step of analyzing the gas after the removal step and quantitatively determining the oxygen gas and the nitrogen gas, wherein
the reactant has a specific surface area of 0.2 m²/g or more.

2. The method for analyzing gas containing nitrosyl fluoride according to claim 1, wherein the reactant contains at least one of alkali metal hydroxides, alkali metal oxides, alkali metal carbonates, alkali metal bicarbonates, alkaline earth metal hydroxides, alkaline earth metal oxides, alkaline earth metal carbonates, and alkaline earth metal bicarbonates.

3. The method for analyzing gas containing nitrosyl fluoride according to claim 1 or 2, wherein the adsorbent contains at least one of porous bodies, carbonaceous materials, iron particles, copper particles, and zinc particles.

4. The method for analyzing gas containing nitrosyl fluoride according to any one of claims 1 to 3, wherein a method for quantitatively determining the oxygen gas and the nitrogen gas in the analysis step is gas chromatography.

5. A method for removing nitrosyl fluoride in gas,
the method being a method for removing nitrosyl fluoride from gas containing the nitrosyl fluoride,
the method comprising:
a conversion step of bringing the gas containing the nitrosyl fluoride into contact with a reactant reacting with the nitrosyl fluoride to generate nitrogen oxide, and converting the nitrosyl fluoride into the nitrogen oxide by a reaction between the nitrosyl fluoride and the reactant; and
a removal step of bringing the gas after the conversion step into contact with an adsorbent adsorbing the nitrogen oxide, and removing the nitrogen oxide from the gas by the adsorption of the nitrogen oxide.

6. The method for removing nitrosyl fluoride in gas according to claim 5, wherein the reactant has a specific surface area of 0.2 m²/g or more.

7. The method for removing nitrosyl fluoride in gas according to claim 5 or 6, wherein the reactant contains at least one of alkali metal hydroxides, alkali metal oxides, alkali metal carbonates, alkali metal bicarbonates, alkaline earth metal hydroxides, alkaline earth metal oxides, alkaline earth metal carbonates, and alkaline earth metal bicarbonates.

8. The method for removing nitrosyl fluoride in gas according to any one of claims 5 to 7, wherein the adsorbent contains at least one of porous bodies, carbonaceous materials, iron particles, copper particles, and zinc particles.
